# EUROPÄISCHE PATENTANMELDUNG

(11) **EP 2 857 233 A1**
(43) Veröffentlichungstag der Anmeldung: **08.04.2015**
(21) Anmeldenummer: 14181703.1
(22) Anmeldetag: 21.08.2014
(51) Int. Cl.: B60D 1/06, B60D 1/48, B60D 1/54, F16H 1/46

(54) **Anhängerkupplung für Kraftfahrzeuge**

(30) Priorität: 02.10.2013 DE 102013220024
(71) Anmelder: ZF Friedrichshafen AG, 88046 Friedrichshafen (DE)
(72) Erfinder: Stratmann, Julian, 49074 Osnabrück (DE); Vortmeyer, Jens, 32361 Preussisch Oldendorf (DE); Klank, Michael, 49084 Osnabrück (DE); Dyck, Stephan, 49086 Osnabrück (DE)

(57) **Zusammenfassung**

Die Erfindung betrifft eine Anhängerkupplung für Kraftfahrzeuge, umfassend einen schwenkbaren Kupplungshaken, einen elektromotorischen Antrieb (6) und ein zwischen Antrieb (6) und Kupplungshaken angeordnetes Planetengetriebe (1).

Es wird vorgeschlagen, dass das Planetengetriebe als Wolfrom-Getriebe (1) ausgebildet ist.

## Beschreibung

Die Erfindung betrifft ein Schwenkmodul für eine Anhängerkupplung für Kraftfahrzeuge nach dem Oberbegriff des Patentanspruches 1.

Durch die EP 1 504 928 A1 wurde eine Anhängerkupplung für Kraftfahrzeuge bekannt. Die bekannte Anhängerkupplung umfasst eine schwenkbar angeordnete, gekröpfte Kupplungsstange, welche von einem Elektromotor über ein Umlaufrädergetriebe (Planetengetriebe) antreibbar ist. Dabei ist die Kupplungsstange, auch Kupplungshaken genannt, aus einer Ruhestellung in eine Betriebsstellung um eine Schwenkachse, welche identisch mit der Achse des Umlaufrädergetriebes ist, verschwenkbar und in den Endpositionen verriegelbar. Das Umlaufrädergetriebe ist als dreigliedriges Planetengetriebe ausgebildet, welches ein angetriebenes Sonnenrad, mit diesem in Eingriff stehende Planetenräder sowie ein mit den Planetenrädern in Eingriff stehendes Hohlrad aufweist. Die Planetenräder sind auf orts- bzw. gehäusefest angeordneten Bolzen gelagert, das Hohlrad ist mit einem Flansch des Kupplungshakens verbunden, bildet also den Abtrieb des Planetengetriebes. Das bekannte Planetengetriebe arbeitet bei festgehaltenem Planetenträger mit einer Standübersetzung zwischen Sonnenrad und Hohlrad und weist bei einem umgekehrten Antrieb, d. h. vom Hohlrad auf das Sonnenrad keine Selbsthemmung auf. Aus diesem Grund wird die Kupplungsstange über einen axial verschiebbaren Sperrbolzen in ihren Endpositionen arretiert.

Ausgehend von dem vorgenannten Stand der Technik, ist es eine Aufgabe der vorliegenden Erfindung, den Schwenkantrieb zu verbessern, wobei auch eine Schwenkbewegung unter Last möglich sein soll. Darüber hinaus soll der Bewegungsablauf des Kupplungshakens beim Schwenkvorgang besser an die räumlichen Gegebenheiten am Kraftfahrzeug anpassbar sein.

Die Aufgabe der Erfindung wird durch die Merkmale des Patentanspruches 1 gelöst. Vorteilhafte Ausgestaltungen ergeben sich aus den Unteransprüchen.

Erfindungsgemäß ist vorgesehen, dass das Planetengetriebe zwischen elektromotorischem Antrieb und Abtrieb für einen Kupplungshaken als Wolfrom-Getriebe ausgebildet ist. Ein Wolfrom-Getriebe oder ein Wolfrom-Satz ist aus dem Stand der Technik, insbesondere der einschlägigen Fachliteratur als Wolfromsches Umlaufrädergetriebe bekannt und wird auch als reduziertes Planetengetriebe bezeichnet. Mit dem Wolfrom-Getriebe sind einerseits sehr hohe Übersetzungen, d. h. vom Antrieb in Richtung Abtrieb ins Langsame möglich, andererseits ist das Wolfrom-Getriebe im Schubbetrieb selbsthemmend und wirkt somit als Rücklaufsperre. Im Fall der Anhängerkupplung ergibt sich der Vorteil, dass der Kupplungshaken, insbesondere dessen Kugelkopf bei der Schwenkbewegung durch eine Anhängerlast belastbar ist, ohne dass eine Umkehr der Antriebsrichtung auftritt. Damit wird das Ankoppeln eines Anhängers vorteilhaft unterstützt und erleichtert.

Nach einer bevorzugten Ausführungsform ist das Wolfrom-Getriebe in einem Gehäuse aufgenommen und umfasst ein antreibbares Sonnenrad, Planetenräder, ein erstes festgehaltenes Hohlrad sowie ein zweites bewegliches Hohlrad, welches das Abtriebsglied bildet. Damit ist ein kompakter Antrieb mit einer sehr hohen Übersetzung ins Langsame vom Sonnenrad auf das bewegliche Hohlrad möglich.

Nach einer weiteren bevorzugten Ausführungsform ist das Abtriebsglied bzw. das bewegliche Hohlrad über mindestens ein Zwischenglied mit dem schwenkbaren Kupplungshaken verbunden. Die Ausbildung des Zwischengliedes beinhaltet mindestens zwei Varianten für die Darstellung des Schwenkvorganges.

Nach einer weiteren bevorzugten Ausführungsform (erste Variante) ist das mindestens eine Zwischenglied als Adapterstück ausgebildet, welches koaxial zur Getriebeachse angeordnet und drehbar im Gehäuse gelagert ist. Nach dieser Variante kann das Abtriebsglied des Wolfrom-Satzes auf einfache Weise mit dem Kupplungshaken verbunden und eine Schwenkbewegung des Kupplungshakens bewirkt werden.

Nach einer weiteren bevorzugten Ausführungsform (zweite Variante) umfasst das Zwischenglied ein koaxial zur Getriebeachse drehbar angeordnetes Antriebsstück und ein schwenk- und kippbar ausgebildetes Abtriebsstück, wobei das Abtriebsstück über ein Drehgelenk mit dem Antriebsstück verbunden ist. Durch das Drehgelenk ist es möglich, dem Abtriebsstück und damit auch dem Kupplungshaken - zusätzlich zu der Schwenkbewegung - eine Kippbewegung zu überlagern.

Nach einer weiteren bevorzugten Ausführungsform umfasst das Drehgelenk ein abtriebsseitiges Kreuzstück, welches vier jeweils um 90° versetzt gegeneinander angeordnete Gelenkzapfen bzw. zwei Gelenkzapfenpaare aufweist, und ein antriebsseitiges Gabelstück, in welches zwei auf einer gemeinsamen Längsachse angeordnete Gelenkzapfen eingreifen. Das erfindungsgemäße Kreuzstück entspricht dabei dem Kreuzstück eines an sich bekanten Kreuzgelenks, auch Kardangelenk genannt, und das Gabelstück entspricht einer der Gelenkgabeln eines Kardangelenks. Damit ist die Längsachse des Abtriebs- oder Kreuzstückes gegenüber der Längsachse des Antriebs- oder Gabelstückes kippbar.

Nach einer weiteren bevorzugten Ausführungsform greift das zweite Paar von Gelenkzapfen mit gemeinsamer Längsachse in einen Lagerring ein, dessen Längsund Drehachse schräg zur Getriebeachse angeordnet ist. Der Lagerring entspricht somit der zweiten Gelenkgabel eines Kardangelenks, bildet jedoch kein Abtriebsglied, vielmehr zwingt er die drehbar mit ihm verbundenen Gelenkzapfen auf eine Umlaufebene, welche schräg zur Getriebeachse, d. h. in einem definierten Winkel, dem so genannten Kippwinkel angeordnet ist. Damit wird dem Abtriebs- bzw. Kreuzstück während der Schwenkbewegung zusätzlich eine Kippbewegung aufgeprägt.

Nach einer weiteren bevorzugten Ausführungsform ist der Lagerring um seine Längsachse drehbar im Gehäuse gelagert und in seiner schrägen Position abgestützt. Damit werden die aus der überlagerten Kippbewegung resultierenden Reaktionskräfte vom Gehäuse aufgenommen.

Nach einer weiteren bevorzugten Ausführungsform ist das Abtriebs- bzw. Kreuzstück formschlüssig mit dem Abtrieb für den Kupplungshaken verbunden. Damit wird der Vorteil einer sicheren und spielfreien Verbindung zwischen dem Drehgelenk und dem Abtrieb erreicht.

Nach einer weiteren bevorzugten Ausführungsform weist der Abtrieb für den Kupplungshaken einen Befestigungsflansch auf, welcher mit dem Kreuzstück lösbar verbunden ist. Über den Befestigungsflansch werden die am Abtrieb eingeleiteten Kräfte (Anhängerlast) über das Drehgelenk in das Gehäuse eingeleitet, wenn ein Kupplungshaken am Abtrieb befestigt ist.

Nach einer weiteren bevorzugten Ausführungsform ist der Befestigungsflansch über eine Abdeckkapsel gegenüber dem Gehäuse abgedichtet, d. h. die Abdeckkapsel überbrückt die Relativbewegung zwischen schwenk- und kippbarem Flansch und ortsfestem Gehäuse und schützt somit das Drehgelenk vor Staub und Schmutz von außen.

Nach einer weiteren bevorzugten Ausführungsform ist am Gehäuse ein konisch ausgebildeter Befestigungszapfen angeordnet, vorzugsweise angegossen. Über den Befestigungszapfen kann das Getriebe mit Abtrieb für den Kupplungshaken und elektromotorischem Antrieb am Fahrzeug befestigt werden; über den Befestigungszapfen wird die Anhängerlast in die Fahrzeugstruktur eingeleitet.

Nach einer weiteren bevorzugten Ausführungsform ist das Wolfrom-Getriebe über eine Antriebswelle antreibbar, auf welcher das Sonnenrad, ein Ritzel sowie eine Rastscheibe drehfest angeordnet sind. Das Ritzel ist Teil einer Übersetzungsstufe zwischen elektromotorischem Antrieb und Getriebeeingang, während die Rastscheibe Teil eines Verriegelungsmechanismus ist.

Nach einer weiteren bevorzugten Ausführungsform ist die Rastscheibe über einen vorzugsweise elektromagnetisch betätigbaren Rastbolzen blockierbar. Damit ist es möglich, die Antriebsseite des Wolfrom-Getriebes mechanisch zu verriegeln, was wegen der Selbsthemmung grundsätzlich zwar nicht notwendig, jedoch bei einer dynamischen Schwingungsbeanspruchung des Abtriebs durch den Kupplungshaken vorteilhaft ist.

Bevorzugt wird das Schwenkmodul in Verbindung mit einem an dem Abtrieb form-, kraft- oder auch stoffschlüssig befestigten Kupplungshaken als Anhängerkupplung verwendet. Das Schwenkmodul kann einzeln oder zusammen mit dem Kupplungshaken vorgefertigt werden. Es kann vorgefertigt mit einem Anhängerquerträger verbunden werden, welches an einem Kraftfahrzeug festgelegt ist. Auch kann der Anhängerquerträger mit dem Schwenkmodul und dem Kupplungshaken zur Montage an ein Kraftfahrzeug vorfertigt sein. Das Schwenkmodul kann direkt oder mittels eines Verbinders an dem Anhängerquerträger festgelegt sein. Der Anhängerquerträger ist über an diesem befestigten Längsträgern oder dergleichen an der Karosserie des Kraftfahrzeugs befestigt, z.B. verschraubt.

Das Schwenkmodul kann des Weiteren elektrisch per Taster oder Schalter oder auch drahtlos bedienbar ausgestaltet sein. Zur Bedienung des Schwenkvorgangs ist des Weiteren eine Steuerung vorgesehen, die den Schwenkvorgang überwacht, eine Fehlbedienung ausschließt und zudem sicherstellt, dass bei Hindernissen, insbesondere bei Gliedmaßen, es zu keiner Einklemmsituation kommen kann. Eine Überlastung des Schwenkmoduls oder seines Antriebs wird so ebenfalls wirkungsvoll unterbunden.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung, eine mechanische Umkehr der Funktionen der einzelnen mechanischen Elemente der Erfindung zu bewirken.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen:
Fig. 1 ein Wolfrom-Getriebe in schematischer Darstellung,
Fig. 2 eine erfindungsgemäße Anhängerkupplung mit elektromotorischem Antrieb,
Fig. 3 die Anhängerkupplung mit einer Drehgelenkverbindung,
Fig. 4 die Anhängerkupplung mit Drehgelenk und Lagerring,
Fig. 5 eine Schnittdarstellung des Wolfrom-Getriebes und der Drehgelenkverbindung,
Fig. 6 eine Gesamtansicht der Anhängerkupplung mit Kupplungshaken und ihre Befestigung an einem Fahrzeugrahmen,
Fig. 7 die Anhängerkupplung mit einem Befestigungszapfen,
Fig. 8a, 8b, 8c den Bewegungsablauf des Kupplungshakens aus der Betriebslage in die Ruhelage,
Fig. 9a, 9b, 9c den Bewegungsablauf des Kupplungshakens in umgekehrter Reihenfolge: aus der Ruhelage in die Betriebslage,
Fig. 10 ein zweites Ausführungsbeispiel der Erfindung ohne Drehgelenkverbindung und
Fig. 11a, 11b, 11c die Schwenkbewegung des Kupplungshakens der Anhängerkupplung gemäß Fig. 10 von der Betriebslage in die Ruhelage.

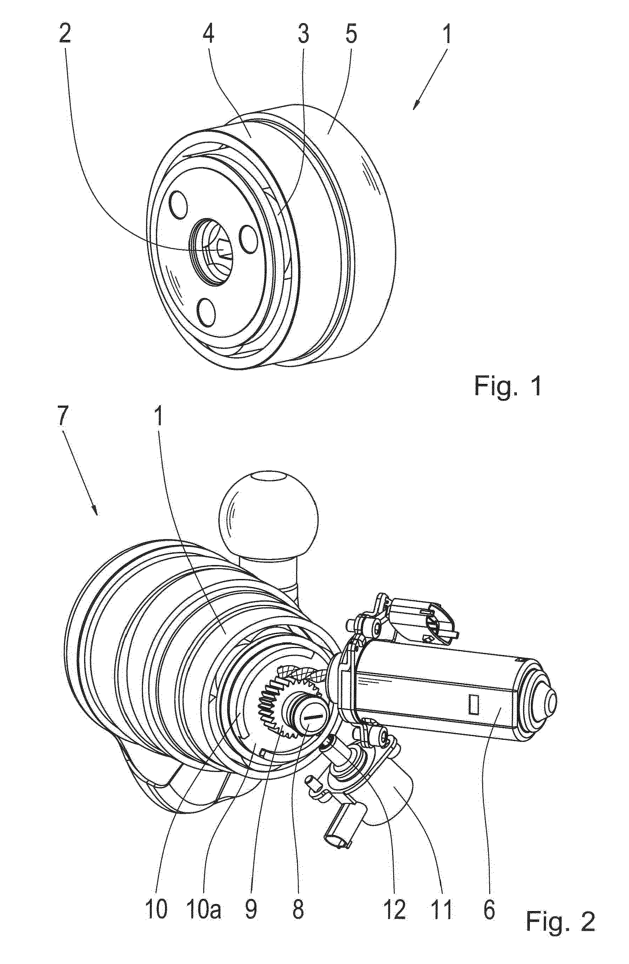

Fig. 1 zeigt in schematischer Darstellung ein Wolfrom-Getriebe 1, d. h. ein reduziertes Planetengetriebe, wie es an sich aus dem Stand der Technik bekannt ist. Das Wolfrom-Getriebe 1 zeichnet sich durch besonders hohe Übersetzungen und einen niedrigen Wirkungsgrad aus, der bis zur Selbsthemmung führt. Das Wolfrom-Getriebe 1 umfasst ein Sonnenrad 2, Planetenräder 3, ein erstes festes Hohlrad 4 sowie ein zweites bewegliches Hohlrad 5. Die Planetenräder 3 stehen einerseits mit dem antreibenden Sonnenrad 2 und andererseits sowohl mit dem festgehaltenen Hohlrad 4 als auch mit dem drehbaren Hohlrad 5 in Zahneingriff. Das Wolfrom-Getriebe 1, welches der Drehmomentübertragung von einem elektromotorischen Antrieb (hier nicht dargestellt) auf einen Kupplungshaken (hier nicht dargestellt) dient, ist so ausgelegt, dass bei einer Umkehr des Antriebes (Schubbetrieb) Selbsthemmung auftritt.

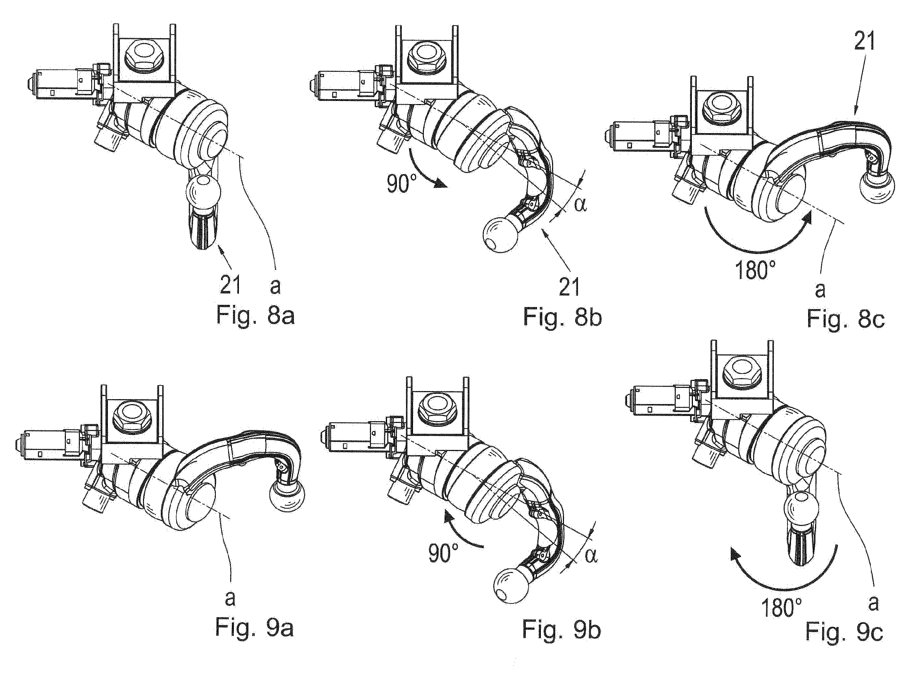

Fig. 2 zeigt einen als Elektromotor 6 ausgebildeten elektromotorischen Antrieb für das Wolfrom-Getriebe 1 (vgl. Fig. 1) einer Anhängerkupplung 7. Das Wolfrom-Getriebe 1, im Folgenden auch kurz Getriebe 1 genannt, weist eine stirnseitig herausragende Antriebswelle 8 auf, auf welcher ein Ritzel 9, eine Rastscheibe 10 mit Ausnehmungen 10a und - was nicht sichtbar ist - das Sonnenrad 2 (vgl. Fig. 1) drehfest angeordnet sind. Der Elektromotor 6 weist eine Motorwelle 6a auf, welche das Ritzel 9 antreibt. Ein Sperrmagnet 11 weist einen ausfahrbaren Rastbolzen 12 auf, welcher in die Ausnehmungen 10a der Rastscheibe 10 eingreift und damit die Antriebswelle 8 blockiert. Die mechanische Verriegelung durch eine formschlüssige Verbindung zwischen Rastbolzen 12 und Rastscheibe 10 erfolgt nur dann, wenn sich der Kupplungshaken der Anhängerkupplung 7 in einer Endposition (vgl. Fig. 8a, 8c) befindet. Wie bereits erwähnt, ist das Wolfrom-Getriebe 1 selbsthemmend, jedoch kann bei Vibrationen unter Last ein Kriechen des Getriebes auftreten - daher ist die mechanische Verriegelung zur Beibehaltung der Endpositionen des Kupplungshakens vorgesehen.

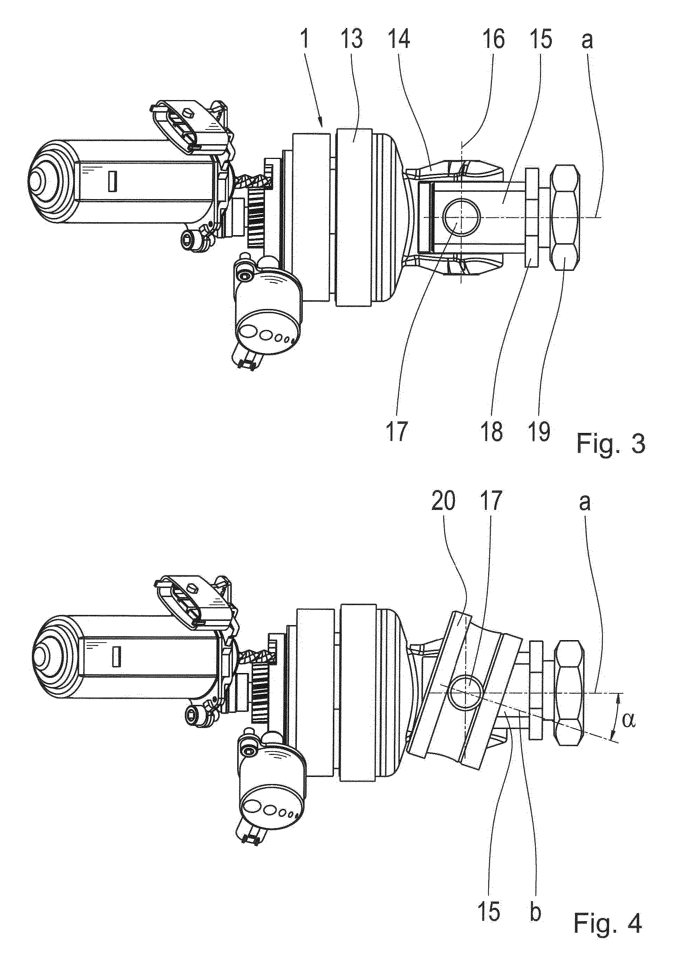

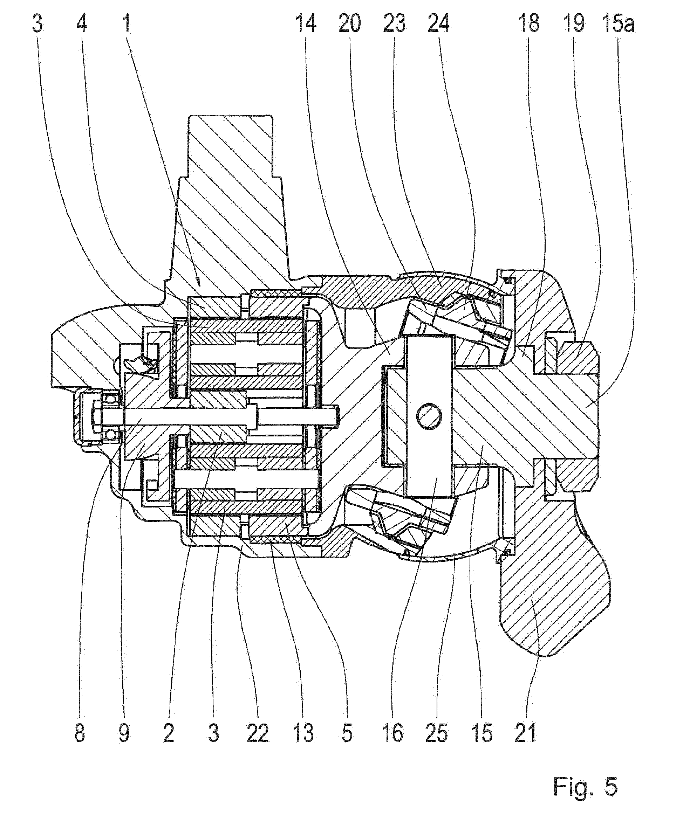

Fig. 3 zeigt die Abtriebsseite des Wolfrom-Getriebes 1, dessen zweites drehbares Hohlrad 5 (vgl. Fig. 1) über ein Lager 13 gegenüber einem nicht dargestellten Gehäuse abgestützt ist. Die Getriebeachse ist mit a bezeichnet. Das zweite Hohlrad ist mit einem Abtriebsstück 14 verbunden, welches als Gabelstück 14 ausgebildet ist. Mit dem Gabelstück 14 ist ein Kreuzstück 15 über einen Drehbolzen 16 (vgl. Fig.5), angedeutet durch eine gestrichelte Linie 16, gelenkig verbunden. Der Drehbolzen 16 wird auch als erstes Gelenkzapfenpaar 16 bezeichnet. Das Kreuzstück 15 weist ein zweites um 90° gegenüber dem ersten versetztes Gelenkzapfenpaar 17 auf. Das erfindungsgemäße Kreuzstück 15 ist mit dem Kreuzstück eines Kreuzgelenks, auch Kardangelenk genannt, vergleichbar. Das Kreuzstück 15 weist an seinem abtriebseitigen Ende einen Vielkant 18 sowie eine Befestigungsmutter 19 auf. Der Vielkant 18 (Polygon) dient der formschlüssigen Aufnahme des hier nicht dargestellten Kupplungshakens, was unten näher erläutert wird. Aufgrund der Drehgelenkverbindung zwischen Kreuzstück 15 und Gabelstück 14 wird das vom zweiten Hohlrad abgegebene Drehmoment auf den Vielkant 18 übertragen.

Fig. 4 zeigt die Abtriebsseite des Wolfrom-Getriebes 1 - wie in Fig. 3 dargestellt - jedoch zusätzlich mit einem Lagerring 20, welcher schräg zur Getriebeachse a angeordnet und über das zweite Gelenkzapfenpaar 17 mit dem Kreuzstück 15 verbunden ist. Wie unten näher erläutert wird, ist der Lagerring 20 in seiner schrägen Position drehbar in einem hier nicht dargestellten Gehäuse gelagert, d. h. er ist um eine gegenüber der Getriebeachse a geneigte Achse b drehbar, welche mit der Getriebeachse a einen Kippwinkel α einschließt.

Fig. 5 zeigt das Getriebe 1 mit seiner An- und Abtriebsseite und einen mit dem Kreuzstück 15 mittels des Vielkants 18 und der Befestigungsmutter 19 formschlüssig und drehfest verbundenen Kupplungshaken 21 (unvollständig dargestellt). In der Schnittdarstellung sind die Antriebswelle 8 mit Ritzel 9 und Sonnenrad 2, die Planetenräder 3 sowie das erste und das zweite Hohlrad 4, 5 deutlich erkennbar. Die Planetenräder 3 sind auf Planetenbolzen und umlaufendem Planetenträger (ohne Bezugszahl) gelagert. Das Getriebe 1 wird von einem Getriebegehäuse 22 aufgenommen, an dem sich einerseits das erste Hohlrad 4 abstützt und gegenüber dem das zweite Hohlrad 5 über das Lager 13 gelagert ist. In der Schnittdarstellung ist ferner deutlich erkennbar, wie das Gabelstück 14 über das erste Gelenkzapfenpaar 16, hier ausgebildet als durchgehender Drehbolzen 16, gelenkig mit dem Kreuzstück 15 verbunden ist, welches das Drehmoment auf den Kupplungshaken 21 überträgt. Mit dem Getriebegehäuse 22 ist ein Lagergehäuse 23 fest verbunden, welches ein V-förmig ausgebildetes Schräglager 24 zur Abstützung des Lagerringes 20 aufnimmt Durch das Schräglager 24, den Lagerring 20 und dessen gelenkige Verbindung mit dem Kreuzstück 15 wird dem Kreuzstück 15, welches die Funktion eines Abtriebsgliedes einnimmt, eine Kippbewegung aufgeprägt. Durch die Schrägstellung des Lagerringes 20 wird das zweite Gelenkzapfenpaar 17 (vgl. Fig. 4) auf eine schräg angeordnete Umlaufebene gezwungen - daraus ergibt sich eine Verkippung der Längsachse a des Kreuzstückes 15 um den Kippwinkel α (vgl. Fig.4). Der Kupplungshaken 21 weist einen Befestigungsflansch 21 a auf, welcher - wie oben erwähnt - mit dem Stirnende 15a des Kreuzstücks 15 fest verbunden ist. Auf der dem Getriebe 1 zugewandten Seite des Befestigungsflansches 21 a ist eine Abdeckkapsel 25 oder Dichtmanschette befestigt, welche gleitend am Lagergehäuse 23 anliegt und somit während der gesamten Schwenk- und Kippbewegung des Kupplungshakens 21 eine Abdichtung des Innenraums bewirkt. Damit wird verhindert, dass Schmutz oder Staub von außen Lager und Gelenke im Inneren verunreinigen.

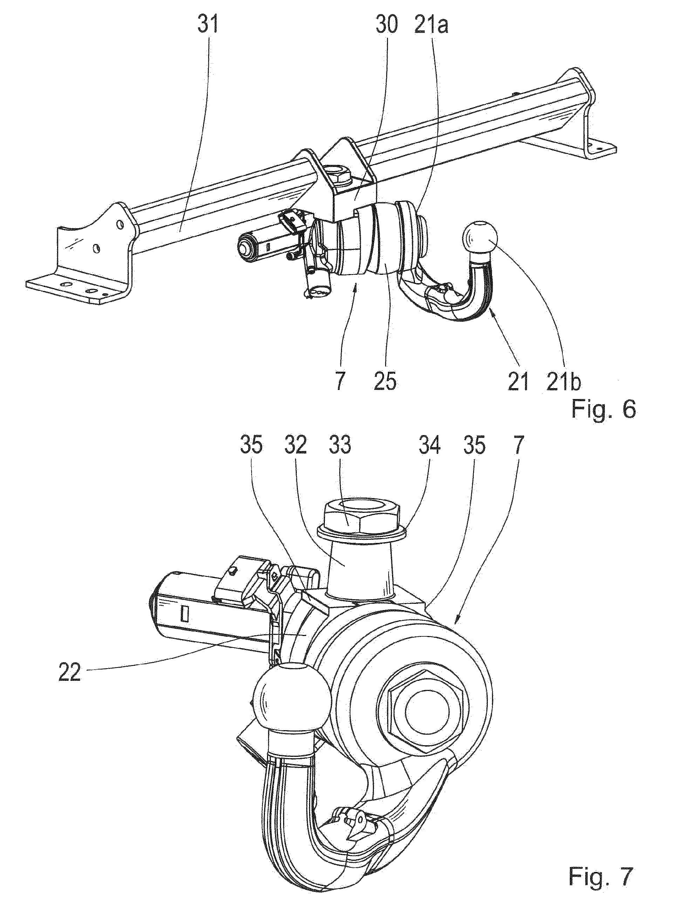

Fig. 6 zeigt eine Gesamtansicht der Anhängerkupplung 7, welche mittels eines Trägerelements 30 an einem fahrzeugseitigen Rahmen 31 lösbar befestigt ist. Der Kupplungshaken 21 ist über seinen Befestigungsflansch 21 a an der Anhängerkupplung 7 - wie in Fig. 5 genauer dargestellt - befestigt und weist am anderen Ende einen Kugelkopf 21 b auf, welcher mit einem (nicht dargestellten) Kupplungsgegenstück koppelbar ist.

Fig. 7 zeigt die Anhängerkupplung 7 mit einem konischen Befestigungszapfen 32, welcher vorzugsweise einstückig mit dem Getriebegehäuse 22 (vgl. Fig. 5) ausgebildet ist und mittels einer Befestigungsmutter 33 sowie einer Scheibe 34 am Trägerelement 30 befestigt werden kann. Um ein Verdrehen der Anhängerkupplung 7 gegenüber dem Trägerelement 30 (vgl. Fig. 6) zu verhindern, sind am Fuß des Befestigungszapfens 32 parallele Absätze 35 vorgesehen, welche mit entsprechenden Absätzen des Trägerelementes 30 korrespondieren und damit Torsionskräfte aufnehmen.

Fig. 8a, Fig. 8b und Fig. 8c zeigen den Bewegungsablauf beim Verschwenken des Kupplungshakens 21 aus seiner in Fig. 8a dargestellten Betriebslage in seine in Fig. 8c dargestellte Ruhelage. Die Schwenkachse a entspricht der Getriebeachse a, wie sie in Fig. 3 und Fig. 4 dargestellt ist. Wird der Kupplungshaken 21 aus der Betriebslage um 90° verschwenkt, wird ihm eine Kippbewegung überlagert, wobei der maximale Kippwinkel mit α bezeichnet ist und etwa 18° betragen kann. Der maximale Kippwinkel α wird in der Mittellage gemäß Fig. 8b erreicht. Wird der Kupplungshaken 21 weiter in Richtung Ruhelage gemäß Fig. 8c verschwenkt, reduziert sich der Kippwinkel α auf Null; der Kupplungshaken 21 ist in der Ruhelage um 180° gegenüber der Betriebslage gemäß Fig. 8a verschwenkt.

Fig. 9a, Fig. 9b und Fig. 9c zeigen den Schwenkvorgang mit überlagerter Kippbewegung in umgekehrter Reihenfolge, d. h. aus der Ruhelage gemäß Fig. 9a in die Betriebslage gemäß Fig. 9c. Auch hier wird der maximale Kippwinkel α nach einer Verschwenkung um 90° in der Mittellage gemäß Fig. 9b erreicht.

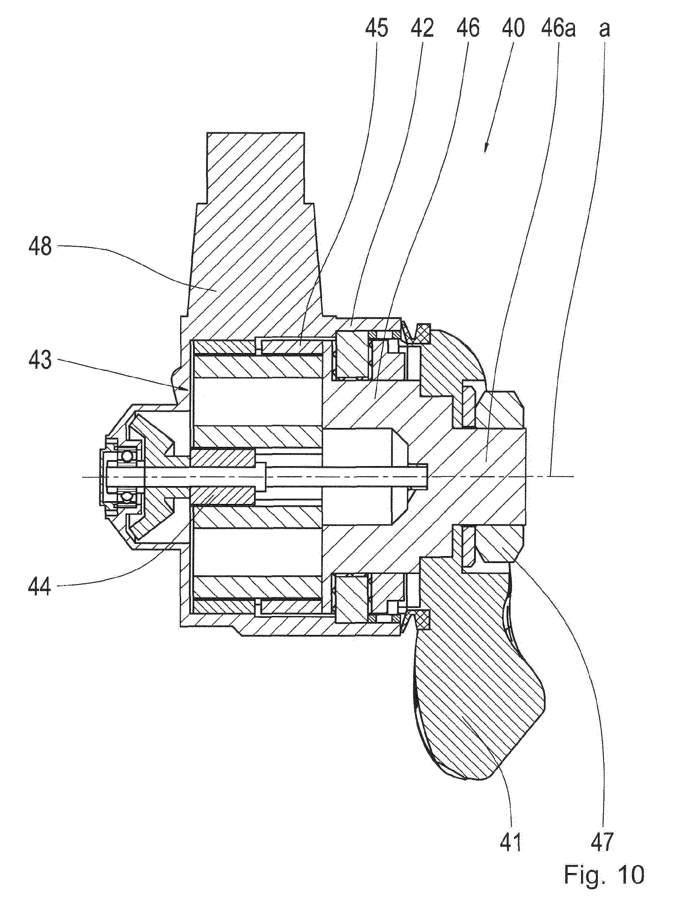

Fig. 10 zeigt als zweites Ausführungsbeispiel der Erfindung eine Anhängerkupplung 40 mit einem um die Getriebeachse a schwenkbaren Kupplungshaken 41 (unvollständig dargestellt). In einem Gehäuse 42 ist ein Wolfrom-Getriebe 43 aufgenommen, welches dem Wolfrom-Getriebe 1 des ersten Ausführungsbeispieles entspricht. Der Antrieb erfolgt ebenfalls elektromotorisch (nicht dargestellt) und über das Sonnenrad 44; der Abtrieb erfolgt über das zweite bewegliche Hohlrad 45. Ein Adapterstück 46 ist koaxial zur Getriebeachse a drehbar im Gehäuse 42 angeordnet und fest mit dem zweiten Hohlrad 45 verbunden. Das Adapterstück 46 weist einen Zapfen 46a auf, an welchem mittels einer Befestigungsmutter 47 der Kupplungshaken 41 drehfest befestigt ist. Im Gegensatz zum vorherigen Ausführungsbeispiel fehlt hier ein Drehgelenk mit Kreuzstück - damit entfällt auch eine überlagerte Kippbewegung. Der Kupplungshaken 41 führt somit nur eine reine Schwenkbewegung um die Getriebeachse a aus. Die Verwendung des Wolfrom-Getriebes 43 ist bei diesem Ausführungsbeispiel ebenso vorteilhaft wie beim ersten Ausführungsbeispiel, da hierdurch - wie oben bereits erwähnt - eine sehr hohe Übersetzung ins Langsame und damit auch ein hohes Drehmoment am Adapterstück 46 erreichbar sind. Darüber hinaus tritt im Schubbetrieb, d. h. bei Belastung des Kupplungshakens 41 durch eine Anhängerlast Selbsthemmung auf. Die Anhängerkupplung 40 braucht somit grundsätzlich keine Verriegelungseinrichtung, die jedoch aufgrund von Schwingungsbeanspruchungen, entsprechend dem ersten Ausführungsbeispiel, hier ebenfalls vorgesehen ist. Die Anhängerkupplung 40 weist - analog dem ersten Ausführungsbeispiel - einen konischen Befestigungszapfen 48 auf, der eine Befestigung am Fahrzeug erlaubt.

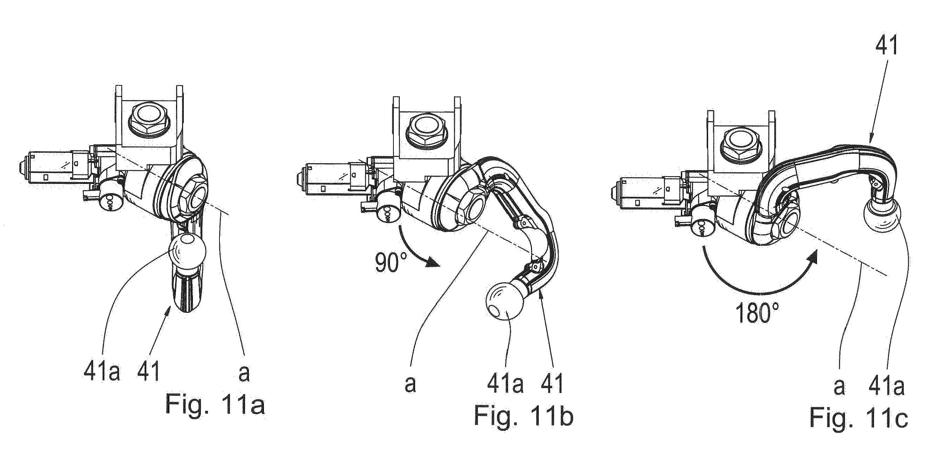

Fig. 11a, Fig. 11b und Fig. 11c zeigen den Ablauf der Schwenkbewegung des Kupplungshakens 41 der Anhängerkupplung 40 (zweites Ausführungsbeispiel). Fig. 11 a zeigt den Kupplungshaken 41 in Betriebsstellung, der Kugelkopf 41 a zeigt nach oben, die Schwenkachse, welche der Getriebeachse entspricht, ist mit a bezeichnet. Fig. 11b zeigt den Kupplungshaken 41, um 90° verschwenkt um die Schwenkachse a. Der Kugelkopf 41 a befindet sich hier in seiner untersten Position. Fig. 11c zeigt den Kupplungshaken 41 nach einer Verschwenkung um 180° aus der Betriebslage in die Ruhelage. Der Kugelkopf 41 a zeigt hier nach unten. Wie deutlich aus der Zeichnung erkennbar, liegt eine reine Schwenkbewegung - ohne Überlagerung einer Kippbewegung - vor.

### Bezugszeichen

- 1: Wolfrom-Getriebe
- 2: Sonnenrad
- 3: Planetenrad
- 4: erstes Hohlrad (fest)
- 5: zweites Hohlrad (drehbar)
- 6: Elektromotor
- 6a: Motorwelle
- 7: Anhängerkupplung
- 8: Antriebswelle
- 9: Ritzel
- 10: Rastscheibe
- 10a: Ausnehmung
- 11: Sperrmagnet
- 12: Rastbolzen
- 13: Lager für Hohlrad
- 14: Gabelstück
- 15: Kreuzstück
- 15a: Stirnende
- 16: erstes Gelenkzapfenpaar
- 17: zweites Gelenkzapfenpaar
- 18: Abtrieb, Vielkant (Polygon)
- 19: Befestigungsmutter
- 20: Lagerring
- 21: Kupplungshaken
- 21a: Befestigungsflansch
- 21b: Kugelkopf
- 22: Getriebegehäuse
- 23: Lagergehäuse
- 24: Schräglager
- 25: Abdeckkapsel
- 30: Trägerelement
- 31: Rahmen
- 32: Befestigungszapfen
- 33: Befestigungsmutter
- 34: Scheibe
- 35: Absatz
- 40: Anhängerkupplung
- 41: Kupplungshaken
- 41a: Kugelkopf
- 42: Gehäuse
- 43: Wolfrom-Getriebe
- 44: Sonnenrad
- 45: zweites Hohlrad
- 46: Adapterstück
- 46a: Zapfen
- 47: Befestigungsmutter
- 48: Befestigungszapfen

- a: Getriebeachse
- b: Drehachse (Lagerring)
- α: Kippwinkel

## Patentansprüche

1. Schwenkmodul für eine Anhängerkupplung, insbesondere für Kraftfahrzeuge, mit einem schwenkbaren Abtrieb (18), einen elektromotorischen Antrieb (6) und ein zwischen Antrieb (6) und Abtrieb (18) angeordnetes Planetengetriebe (1, 43), **dadurch gekennzeichnet, dass** das Planetengetriebe als Wolfrom-Getriebe (1, 43) ausgebildet ist.

2. Schwenkmodul nach Anspruch 1, **dadurch gekennzeichnet, dass** das Wolfrom-Getriebe (1, 43) eine Getriebeachse (a) aufweist, in einem Gehäuse (22, 42) aufgenommen ist und ein Sonnenrad (2, 44), Planetenräder (3), ein erstes und ein zweites Hohlrad (4, 5) umfasst, wobei das Sonnenrad (2, 44) das Antriebsglied bildet, das erste Hohlrad (4) am Gehäuse (22) abgestützt ist und das zweite Hohlrad (5, 45) das Abtriebsglied bildet.

3. Schwenkmodul nach Anspruch 2, **dadurch gekennzeichnet, dass** das Abtriebsglied (5, 45) über mindestens ein Zwischenglied (14, 15; 46) mit dem Abtrieb (18) verbunden ist.

4. Schwenkmodul nach Anspruch 3, **dadurch gekennzeichnet, dass** das mindestens eine Zwischenglied als koaxial zur Getriebeachse (a) angeordnetes Adapterstück (46, 46a) ausgebildet ist.

5. Schwenkmodul nach Anspruch 3, **dadurch gekennzeichnet, dass** das mindestens eine Zwischenglied ein koaxial zur Getriebeachse (a) angeordnetes Antriebsstück (14) und ein Abtriebsstück (15) umfasst, wobei das Abtriebsstück (15) mit dem Antriebsstück (14) über ein Drehgelenk (16, 17) miteinander verbunden sind.

6. Schwenkmodul nach Anspruch 5, **dadurch gekennzeichnet, dass** das Abtriebsstück als Kreuzstück (15) mit einem ersten und einem zweiten um 90° gegeneinander versetzt angeordneten Gelenkzapfenpaar (16, 17) ausgebildet ist.

7. Schwenkmodul nach Anspruch 6, **dadurch gekennzeichnet, dass** das erste Gelenkzapfenpaar (16) in das Gabelstück (14) und das zweite Gelenkzapfenpaar (17) in einen schräg zur Getriebeachse (a) angeordneten Lagerring (20) eingreifen.

8. Schwenkmodul nach Anspruch 7, **dadurch gekennzeichnet, dass** der Lagerring (20) im Gehäuse (22) abgestützt und drehbar gelagert ist.

9. Schwenkmodul nach Anspruch 5, 6, 7 oder 8, **dadurch gekennzeichnet, dass** das Kreuzstück (15) formschlüssig mit dem Abtrieb (18) verbunden ist.

10. Schwenkmodul nach Anspruch 8, **dadurch gekennzeichnet, dass** der Abtrieb (18) einen Befestigungsflansch (21 a) aufweist, der mit dem Kreuzstück (15) lösbar verbunden ist.

11. Schwenkmodul nach Anspruch 10, **dadurch gekennzeichnet, dass** der Befestigungsflansch (21 a) mittels einer Abdeckkapsel (25) gegenüber dem Gehäuse (23) abgedichtet ist.

12. Schwenkmodul nach einem der Ansprüche 2 bis 11, **dadurch gekennzeichnet, dass** am Gehäuse (22) ein konisch ausgebildeter Befestigungszapfen (32) angeordnet ist.

13. Schwenkmodul nach einem der Ansprüche 1 bis 12, **dadurch gekennzeichnet, dass** das Wolfrom-Getriebe (1) über das Sonnenrad (2) und eine Antriebswelle (8) antreibbar ist, auf welcher eine Rastscheibe (10) angeordnet ist.

14. Schwenkmodul nach Anspruch 13, **dadurch gekennzeichnet, dass** die Rastscheibe (10) über einen Rastbolzen (12) blockierbar ist.

15. Anhängerkupplung mit einem Schwenkmodul nach einem der vorgehenden Ansprüche.
